(19) **Europäisches Patentamt**
**European Patent Office**
**Office européen des brevets**

(11) **EP 3 985 581 A1**

(12) **EUROPEAN PATENT APPLICATION**

(43) Date of publication:
**20.04.2022 Bulletin 2022/16**

(21) Application number: **21189087.6**

(22) Date of filing: **02.08.2021**

(51) International Patent Classification (IPC):
**G06Q 10/04** (2012.01)        **G06Q 10/08** (2012.01)

(52) Cooperative Patent Classification (CPC):
**G06Q 10/04; G06Q 10/0834**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.10.2020 JP 2020174908**

(71) Applicant: **FUJITSU LIMITED
Kanagawa 211-8588 (JP)**

(72) Inventors:
• **Kawano, Hiroyasu
Kawasaki-shi, Kanagawa, 211-8588 (JP)**
• **Matsuoka, Hidetoshi
Kawasaki-shi, Kanagawa, 211-8588 (JP)**

(74) Representative: **Hoffmann Eitle
Patent- und Rechtsanwälte PartmbB
Arabellastraße 30
81925 München (DE)**

(54) **SOLVING PROGRAM, SOLVING METHOD, AND INFORMATION PROCESSING DEVICE**

(57)    A solving program in which a computer performs processing of: generating, based on an index value related to an evaluation function value, a first candidate target from combinatorial targets in a combinatorial optimization problem that minimizes the evaluation function value under a plurality of constraint conditions; analyzing, based on a first result obtained by solving and optimizing based on the first candidate target under a first constraint condition, a combination that is included in the first result and that is a constraint violation, selecting, from among the combinatorial targets, a target related to resolving of the constraint violation that has been analyzed, obtaining, based on a second candidate target that include the selected combinatorial target and the first result, a second result which is optimized, and determining a solving result of the combinatorial optimization problem based on an evaluation result of the second result.

FIG. 1

EP 3 985 581 A1

**Description**

[Field]

The embodiment discussed herein is related to a solving program, a solving method, and an information processing device.

[Background Art]

A delivery planning problem is a combinatorial optimization problem that determines an operational schedule of vehicles by using an optimization solver or the like so as to satisfy various constraint conditions and minimize the operational cost.

For example, when determining an operational schedule, first, a plurality of candidates of executable operational transports (candidate transports) for each vehicle are generated in advance. Next, a combination of the operational transports is selected from among the candidate transports by using the optimization solver or the like so as to satisfy an order as the constraint conditions desired by individual collection places and minimize the operational cost.

As related art for solving such a delivery planning problem, the following delivery planning method is known: An initial delivery plan is created based on delivery request data and vehicle data and a modification plan obtained by modifying the created delivery plan is evaluated. Next, whether the modification plan is the best of delivery plans having been created so far is determined to obtain the best delivery plan.

[Citation List]

[Patent Literature]

[PTL 1] Japanese Laid-open Patent Publication No. 11-245819.
[PTL 2] Japanese Laid-open Patent Publication No. 2002-302257.
[PTL 3] Japanese Laid-open Patent Publication No. 2007-210699.

[Summary of Invention]

[Technical Problem]

In order to solve the delivery planning problem to obtain an evaluation function value, for example, an operational schedule that minimizes the operational cost (solution), many candidate transports are prepared. For example, in a large-scale delivery planning problem, there may be about a million candidate transports.

However, with the above-described related art, there is a problem in that, when the number of candidate transports that become targets of the combinatorial optimization is large, it is difficult to obtain the solution within a practical period of time.

In one aspect, an object is to provide a solving program, a method of solving, and an information processing device with which a solution may be obtained in a shorter calculation time.

[Solution to Problem]

In one aspect of embodiment, A solving program in which a computer performs processing of: generating, based on an index value related to an evaluation function value, a first candidate target from combinatorial targets in a combinatorial optimization problem that minimizes the evaluation function value under a plurality of constraint conditions; analyzing, based on a first result obtained by solving and optimizing based on the first candidate target under a first constraint condition that is a subset of the plurality of constraint conditions, a combination that is included in the first result and that is a constraint violation; selecting, from among the combinatorial targets, a target related to resolving of the constraint violation that has been analyzed; obtaining, based on a second candidate target that include the selected combinatorial target and the first result, a second result optimized based on the first constraint condition and a second constraint condition that are included in the plurality of constraint conditions; and determining a solving result of the combinatorial optimization problem based on an evaluation result of the obtained second result.

[Effects of Invention]

The solution may be obtained in a shorter period of calculation time.

[Brief Description of Drawings]

FIG. 1 is a block diagram illustrating an example of a functional configuration of an information processing device according to an embodiment;
FIG. 2 is an explanatory diagram illustrating an example of a solving procedure;
FIG. 3 is a flowchart illustrating an example of the solving procedure;
FIG. 4A is an explanatory diagram illustrating a data example of operational transport information and index values;
FIG. 4B is an explanatory diagram illustrating a detailed example of the operational transport information;
FIG. 4C is an explanatory diagram illustrating a detailed example of the operational transport information;
FIG. 5 is an explanatory diagram illustrating examples of the candidate operational transports;
FIG. 6 is an explanatory diagram illustrating an example of a solution of a solving result;
FIG. 7 is an explanatory diagram illustrating examples of additional candidate transports;
FIG. 8 is an explanatory diagram illustrating examples of updated candidate operational transports;
FIG. 9 is an explanatory diagram illustrating an example of the solution of the solving result;
FIG. 10 is an explanatory diagram illustrating examples of the solution of the solving result and the additional candidate transports;
FIG. 11 is an explanatory diagram illustrating examples of the updated candidate operational transports;
FIG. 12 is an explanatory diagram illustrating an example of the solution of the solving result; and
FIG. 13 is an explanatory diagram illustrating an example of the configuration of a computer.

[Description of Embodiments]

A solving program, a method of solving, and an information processing device according to an embodiment are described below with reference to the drawings. In the embodiment, components having the same functions are denoted by the same reference signs, thereby omitting redundant description thereof. The solving program, the method of solving, and the information processing device to be described in the following embodiment are merely an example and do not limit the embodiment. The embodiment below may be appropriately combined to the degree with which no inconsistency is caused.

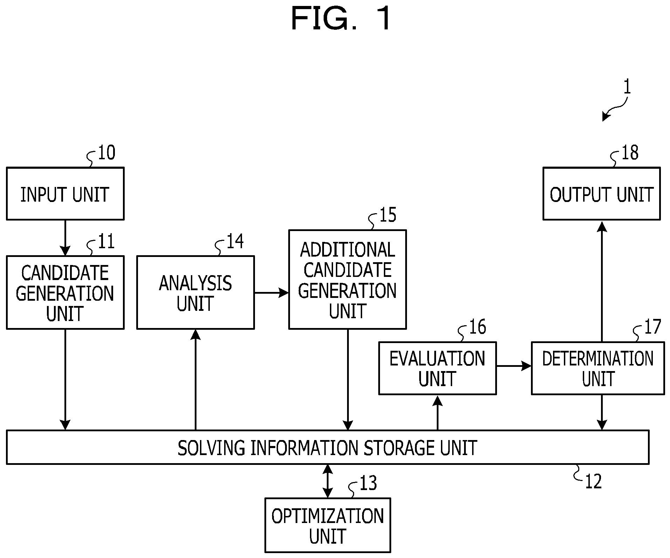

FIG. 1 is a block diagram illustrating an example of a functional configuration of the information processing device according to the embodiment. An information processing device 1 illustrated in FIG. 1 accepts input of data related to a combinatorial optimization problem that minimizes an evaluation function value under specific constraint conditions, for example, minimizes a cost that is an expense to be used for operation in a delivery planning problem. Next, based on the input data, the information processing device 1 performs solving so as to minimize the cost under the accepted constraint conditions and outputs a combinatorial optimization result (solution) obtained by the solving. For example, a personal computer (PC) or the like may be applied as the information processing device 1.

It is assumed that the combinatorial optimization problem solved by the information processing device 1 is a delivery planning problem according to the present embodiment. For example, the information processing device 1 obtains, based on the input data, an operational schedule in which operational transports for delivering an article to a remote location (from a shipment place to a collection place) are combined under constraint conditions related to the delivery of the article so that the operational cost is minimized. The combinatorial optimization problem to be solved by the information processing device 1 is not limited to the delivery planning problem. The combinatorial optimization problem may be, for example, a production planning problem for obtaining a production plan by which the profit is maximized when products are produced by combining components.

As illustrated in FIG. 1, the information processing device 1 includes an input unit 10, a candidate generation unit 11, a solving information storage unit 12, an optimization unit 13, an analysis unit 14, an additional candidate generation unit 15, an evaluation unit 16, a determination unit 17, and an output unit 18.

The input unit 10 is a processing unit that accepts input of various types of data related to the combinatorial optimization problem (delivery planning problem according to the present embodiment) to be solved by an operational instruction from a user, file input, or the like. For example, the data accepted by the input unit 10 includes operational transport information related to the operational transports to become combinatorial targets. The data accepted by the input unit 10 also includes order information related to order amounts of shipment and reception at shipment places and collection places. The data accepted by the input unit 10 also includes, in addition to the operational transport information and the order information, various constraint conditions and a determination reference value such as a threshold used at the time of determination.

The candidate generation unit 11 is a processing unit that generates, based on index values related to the cost, first candidate targets (operational transports according to the present embodiment) from the combinatorial targets (candidate operational transports according to the present embodiment) in the optimization problem.

For example, the candidate generation unit 11 calculates the index value related to the cost of each of the operational transports included in the operational transport information based on an operational expense of the operational transport. For example, the candidate generation unit 11 calculates the index value by dividing an element related to the transportation efficiency of each of the operational transports included in the operational transport information by the operational expense. Operational transports the transportation efficiency of which are clearly low such as an operational transport with a small amount of loading and an operational transport that runs through a detour route may be excluded from index-value calculation targets in advance.

Examples of the operational expense included in the operational transport information include, for example, a vehicle rental fee, a fuel cost, a high-way fee, a labor cost, and so forth. Examples of the element related to the transportation efficiency included in the operational transport information include, for example, a maximum carrying capacity of the vehicle, a maximum carrying weight of the vehicle, a maximum travel distance per day, and so forth.

Next, the candidate generation unit 11 creates a candidate list by sorting the operational transports into an order from the largest calculated index value (descending order). Next, the candidate generation unit 11 extracts, from the top, an arbitrary number of operational transports with a larger index value than a preset threshold, for example, operational transports that are highly likely to reduce the cost when combined and sets the extracted operational transports as candidate operational transports.

The solving information storage unit 12 is a storage device or the like that stores various types of information related to the solving performed by the information processing device 1. For example, the information stored in the solving information storage unit 12 includes data accepted by the input unit 10, data generated by the candidate generation unit 11/additional candidate generation unit 15, and the combinatorial optimization result (solution) by the optimization unit 13.

The optimization unit 13 is a processing unit that obtains the combinatorial optimization result (solution) that minimizes the cost under the set constraint conditions from combinatorial targets in the combinatorial optimization problem. For example, the optimization unit 13 obtains the combinatorial optimization result (solution) by using a known optimization process using, for example, an optimization solver or an Ising machine (digital annealer or the like).

The analysis unit 14 is a processing unit that reads from the solving information storage unit 12 the combinatorial optimization result (referred to as the solution or the immediately preceding solution) by the optimization unit 13 and analyzes the content of a constraint violation included in the immediately preceding solution. For example, the analysis unit 14 checks whether or not the solution obtained by the optimization unit 13 satisfies each of the constraint conditions and sets unsatisfied constraint condition as the constraint violation.

Based on the constraint violation analyzed from the immediately preceding solution, the additional candidate generation unit 15 obtains a target related to resolving the constraint violation (additional candidate transport according to the present embodiment) from the operational transports that are the combinatorial targets in the optimization problem. For example, when the content of the constraint violation is non-collection of freight at a specific shipment place, the additional candidate generation unit 15 obtains an operational transport capable of collecting the freight at the shipment place from the operational transports included in the operational transport information. Next, the additional candidate generation unit 15 generates second candidate targets (updated candidate operational transports according to the present embodiment) by adding the obtained additional candidate transport to the immediately preceding solution.

The additional candidate generation unit 15 may use a model generated by known machine learning to obtain the additional candidate transport from the operational transports included in the operational transport information.

For example, a model is created by performing machine learning based on teacher data that is a set of first past result data (candidate operational transport) including a specific constraint violation and second past result data (additional candidate transport) related to resolving of the specific constraint violation. As an example, when a flag indicating a specific constraint violation and first past result data are input, machine learning of the model is performed so as to output second past result data.

For example, the additional candidate generation unit 15 may obtain the additional candidate transport related to resolving of the constraint violation by inputting a flag indicating the analyzed constraint violation and the candidate operational transport to the model created by the machine learning as described above.

The evaluation unit 16 is a processing unit that calculates an evaluation value for the constraint conditions (all the set constraint conditions) and the cost of the solution based on the immediately preceding solution obtained by the optimization unit 13. For example, the evaluation unit 16 obtains the total of the cost values (for example, total operational expense) of the combinatorial targets (operational transports according to the present embodiment) included in an immediately preceding solution. Next, the evaluation unit 16 calculates the evaluation value by, for example, adding to the obtained total value of the cost a weighting value corresponding to whether each of the constraint conditions is satisfied.

The determination unit 17 is a processing unit that determines a solving result of the combinatorial optimization problem based on an evaluation result for the immediately preceding solution indicated by the evaluation value calculated by the evaluation unit 16. For example, when the evaluation value for the immediately preceding solution falls within the set determination reference value, the determination unit 17 determines that solution as the solving result.

The output unit 18 is a processing unit that performs an output process such as display output to a display device and file output. For example, the output unit 18 outputs the solving result determined by the determination unit 17 to the user as display output to the display device or file output.

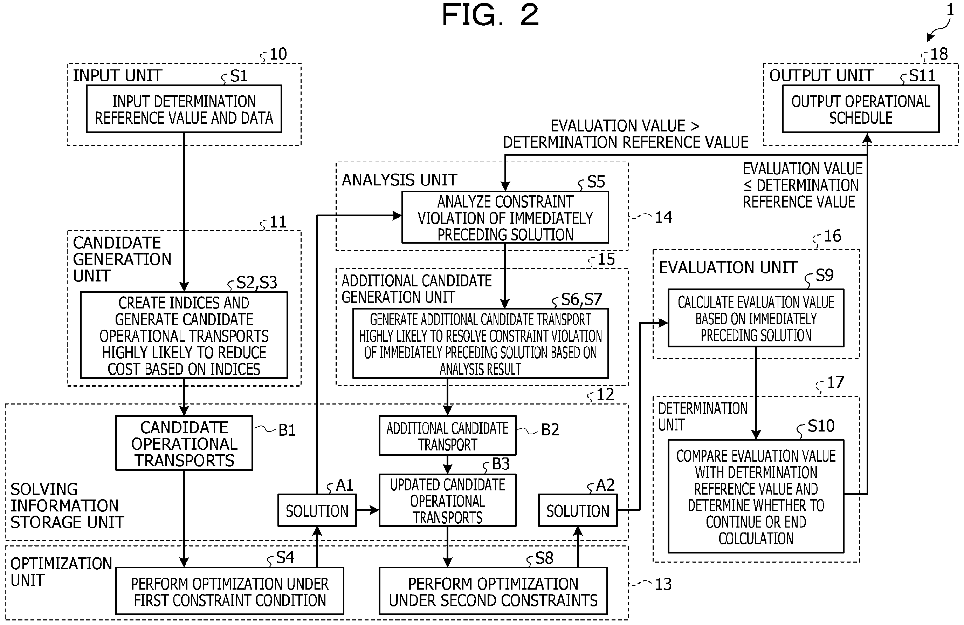

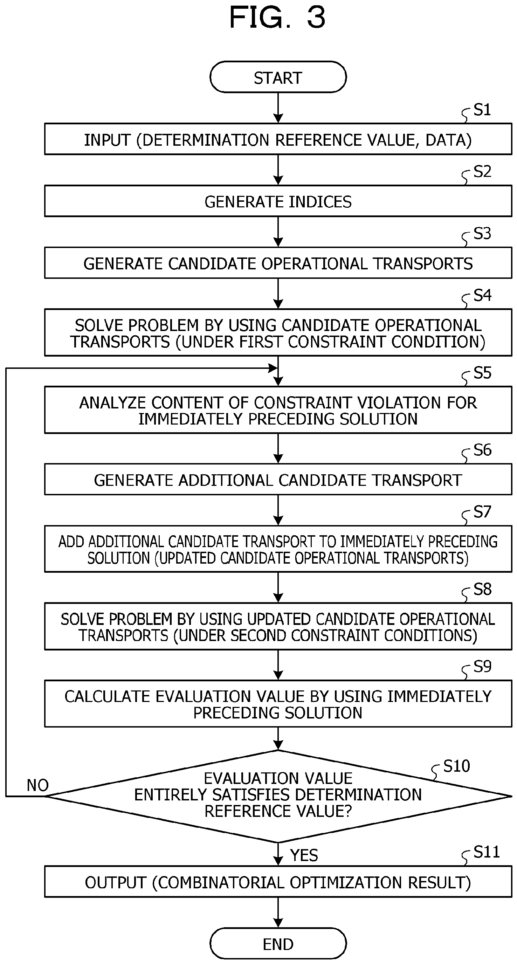

Next, a solving procedure for the combinatorial optimization problem in the information processing device 1 will be described in detail with reference to FIGs. 2 and 3. FIG. 2 is an explanatory diagram illustrating an example of the solving procedure. FIG. 3 is a flowchart illustrating an example of the solving procedure.

As illustrated in FIGs. 2 and 3, when processing is started, the input unit 10 accepts input of data such as a determination reference value related to the delivery planning problem, operational transport information, and order information (S1).

Next, the candidate generation unit 11 creates the index value related to the cost of each of the operational transports included in the operational transport information (S2). Next, the candidate generation unit 11 sorts the operational transports from one of the operational transports with a largest index value (descending order) and extracts, from the top, an arbitrary number of the operational transports with larger index values than a preset threshold so that candidate operational transports B1 are generated (S3). The candidate generation unit 11 stores the generated candidate operational transports B1 in the solving information storage unit 12.

Next, the optimization unit 13 reads the candidate operational transports B1 generated by the candidate generation unit 11 from the solving information storage unit 12. Next, the optimization unit 13 sets the candidate operational transports B1 as the combinatorial targets and performs optimization by solving under a subset of the constraint conditions (first constraint conditions) out of all the constraint conditions (S4). Next, the optimization unit 13 stores a solution A1 obtained by the optimization in the solving information storage unit 12.

In S4, the subset of the constraint conditions used for the optimization out of all the constraint conditions may be arbitrarily selected constraint conditions or constraint conditions designated by the user by using the input unit 10.

Next, the analysis unit 14 obtains the immediately preceding solution A1 by the optimization unit 13 from the solving information storage unit 12 and analyzes the content of the constraint violation for the solution A1 (S5).

Next, based on the constraint violation analyzed from the immediately preceding solution A1, the additional candidate generation unit 15 extracts, from the operational transports included in the operational transport information, an operational transport related to resolving of the constraint violation (highly likely to resolve the constraint violation) and generates an additional candidate transport B2 (S6).

Next, the additional candidate generation unit 15 generates updated candidate operational transports B3 by adding the additional candidate transport B2 to the immediately preceding solution A1 and stores the generated updated candidate operational transports B3 in the solving information storage unit 12 (S7).

Next, the optimization unit 13 reads the updated candidate operational transports B3 generated by the additional candidate generation unit 15 from the solving information storage unit 12. Next, the optimization unit 13 sets the updated candidate operational transports B3 as the combinatorial targets and performs optimization by solving under constraint conditions (second constraint conditions) the number of which is greater than that of the first constraint conditions (S8). Next, the optimization unit 13 stores a solution A2 obtained by the optimization in the solving information storage unit 12.

It is sufficient that the second constraint conditions used in the optimization in S8 be constraint conditions including a greater number of constraints than that of the constraint conditions (for example, the first constraint conditions) used in the immediately preceding optimization. For example, according to the present embodiment, a subset of all the constraint conditions is set as the first constraint conditions, and all the constraint conditions are set as the second constraint conditions.

The second constraint conditions do not necessarily include all the constraint conditions from the beginning. The number of second constraint conditions may be increased every time the processing is repeated. For example, when a first constraint condition is set as one of three constraint conditions, the number of the second constraint conditions may be greater than that of the preceding constraint condition by one (for example, two out of three). Then, when the processing is repeated, the number of the constraint conditions may be further greater than that of the preceding constraint conditions by one (for example, all of three).

Next, the evaluation unit 16 calculates the evaluation value for the solution A2 based on the immediately preceding solution A2 (S9). Next, the determination unit 17 compares the evaluation value calculated by the evaluation unit 16 with the determination reference value and determines whether or not the evaluation value satisfies the determination reference value (S10). For example, the determination unit 17 determines whether or not the evaluation value $\leq$ the determination reference value.

When the evaluation value satisfies the determination reference value (S10: Yes), the determination unit 17 determines the immediately preceding solution A2 as the solving result. Next, the output unit 18 outputs the combinatorial content indicated by the solution A2 as the combinatorial optimization result (S11).

When the evaluation value does not satisfy the determination reference value (S10: No), the determination unit 17 returns the processing to S5. The analysis unit 14, the additional candidate generation unit 15, and the optimization unit 13 that have returned the processing to S5 set the solution A2 as the immediately preceding solution and repeat the above-described processes in S5 to S8. Next, in S9 and S10, the solution A2 newly obtained by the repetition is evaluated, and the solving result is determined.

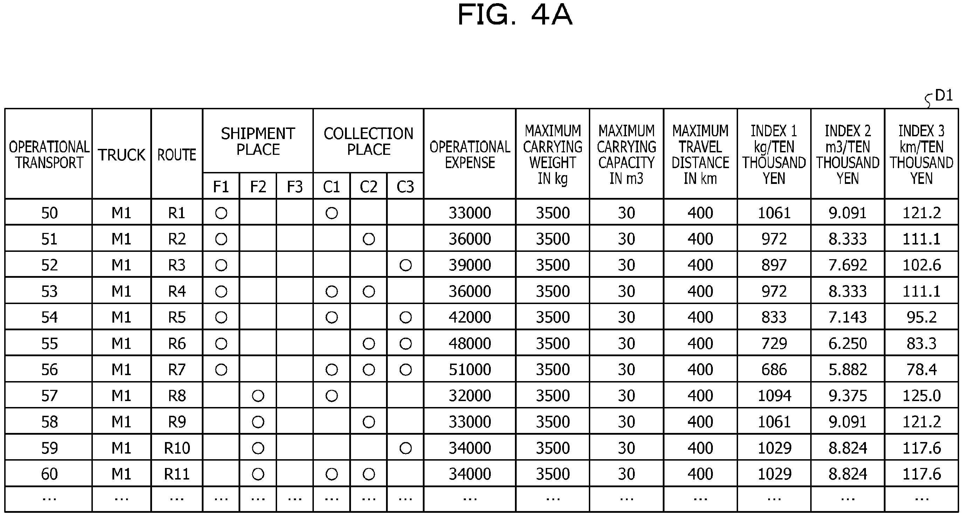

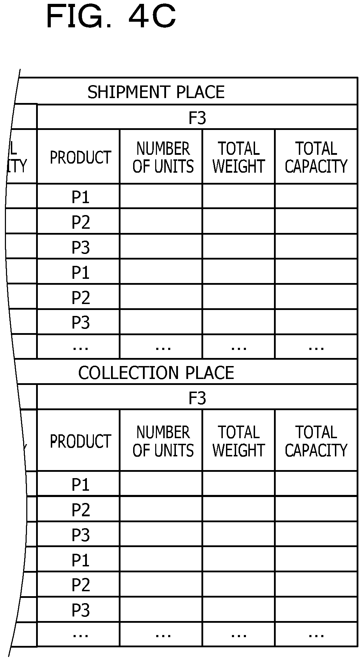

Next, the above-described solving procedure will be described with specific examples (first specific example, second specific example). FIG. 4A is an explanatory diagram illustrating a data example of the operational transport information and the index values.

As illustrated in FIG. 4A, in operational transport information D1 of the specific example, a truck indicating the vehicle, a route, the shipment place, the collection place, the operational expense, and vehicle transport capacities (the maximum carrying weight, the maximum carrying capacity, and the maximum travel distance per day of each vehicle) are set on an operational-transport-ID (represented by a number from the first to nth transport) -by-operational-transport-ID basis.

It is assumed that, regarding trucks, there are a single 10-ton truck (L1), a single 4-ton truck (M1), and a single 2-ton truck (S1). There are shipment places F1, F2, F3 (three places), and the shipment places where the operational transport stops are indicated by circular marks. There are collection places C1, C2, C3 (three places), and the collection places where the operational transport stops are indicated by circular marks.

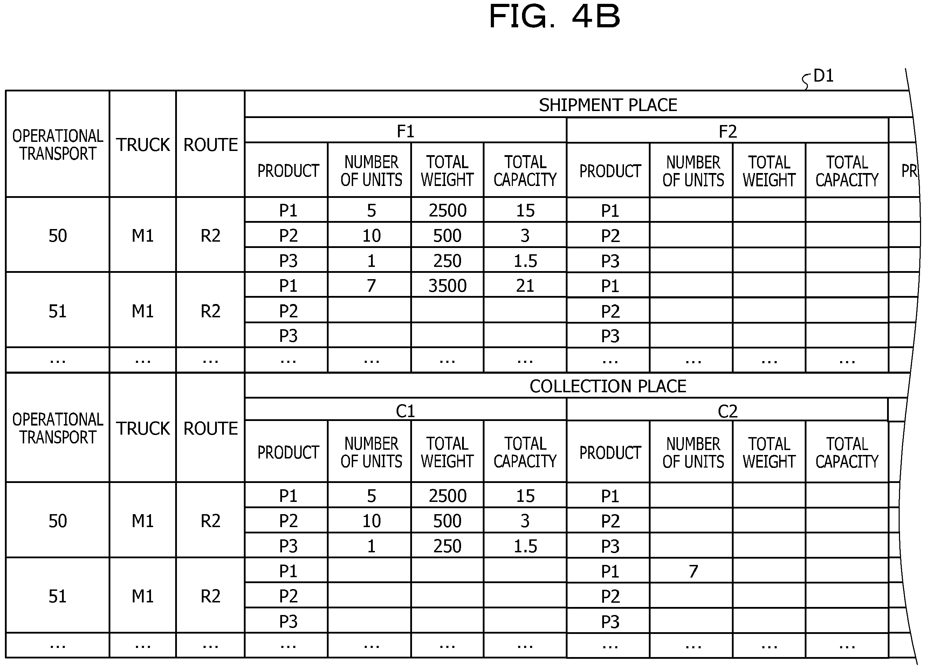

FIG. 4B is an explanatory diagram illustrating a detailed example of the operational transport information D1. As illustrated in FIG. 4B, it is assumed that the quantity, the total weight, and the total capacity of the shipping products (P1, P2, P3) or the quantity, the total weight, and the total capacity of the reception products (P1, P2, and P3) are indicated for each of the shipment places and each of the collection places. For example, it is assumed that, for each of the shipment places, the maximum quantity of each of the products loaded per truck at the shipment place is set as an individual quantity of shipping. Likewise, it is assumed that, for each of the collection places, the maximum quantity of each of the products unloaded per truck at the collection place is set as an individual quantity of collecting.

Referring back to FIG. 4A, it is assumed that there are R1 to R49 (49 routes) as routes coupling the shipment places and the collection places. The number of operational transports is greater than or equal to the number of transports = the number of vehicles × the number of routes = 3 × 49 = 147.

Regarding the above-described operational transport information D1, the candidate generation unit 11 generates an index 1 to an index 3 for each of the operational transport IDs. It is assumed that the index 1 is the maximum carrying weight/the operational expense. It is assumed that the index 2 is the maximum carrying capacity/the operational expense. It is assumed that the index 3 is the maximum travel distance per day/the operational expense.

Regarding the order information, shipment and reception are set as follows. Shipment: • product P1 (500 kg, 3.0 m^3 per unit) shipped from shipment place F1: 10 units, • product P2 (50 kg, 0.3 m^3 per unit) shipped from shipment place F2: 70 units, • product P3 (250 kg, 1.5 m^3 per unit) shipped from shipment place F3: 4 units, Reception: • product P2 received at collection place C1: 50 units, • product P1 received at collection place C2: 10 units, • product P2 and product P3 received at collection place C3: 20 units and 4 units, respectively.

It is assumed that the constraint conditions include the followings.

(1) In each operational transport, any one of the trucks is used only.
(2) Each operational transport is operated only once per day.
(3) A constraint on stopping and work related to freight at the shipment places and the collection places: it is demanded that the product be loaded at the shipment place where the truck stops and unloaded at the collection place. There is no situation in which the truck stops but the work (loading or unloading) is not performed.
(4) A constraint on the amount of freight: No product remains in the truck when the work is completed (It is assumed that there is no product in the truck at the start of the work. All the products loaded on the truck are unloaded).
(5) It is assumed that the total weight of the products loaded ≤ the maximum carrying weight of the vehicle used.
(6) It is assumed that the total capacity of the products loaded ≤ the maximum carrying capacity of the vehicle used.
(7) A constraint on use of the shipment places and the collection places: any of the shipment places and any of the collection places are used at least once.

It is assumed that the constraint conditions (1), (2), (5), and (6) are considered in advance when the operational transport information D1 is generated, and all of these constraint conditions are satisfied by the operational transport information D1. Accordingly, the constraints (3), (4), and (7) are used in the optimization.

An expression representing the constraint (3) on stopping and work related to freight at the shipment places and the collection places is expression (1) below.

[Expression 1]

$$\sum_{n=1} F_{in}X_n \geqq 1 \quad and \quad \sum_{n=1} C_{jn}X_n \geqq 1 \qquad \cdots(1)$$

$F_{in}$ is a constant. $F_{in}$ is 1 in the case where the circle mark is present for the candidate operational transport and 0 in the case where the circle mark is not present for the candidate operational transport at a shipment place i used in an operational transport n (corresponding to the circle mark present for the operational transport). $C_{jn}$ is a constant. $C_{jn}$ is 1 in the case where the circle mark is present for the candidate operational transport and 0 in the case where the circle mark is not present for the candidate operational transport at a collection place j used in the operational transport n (corresponding to the circle mark present for the operational transport). $X_n$ is a variable. $X_n$ is 1 in the case where the operational transport n is used and 0 in the case where the operational transport n is not used.

Expressions representing the constraint (4) on the amount of freight are expressions (2) below.

[Expression 2]

$$\left.\begin{array}{l} \sum_{k=1}\left(D_k - \sum_{j=1}\sum_{n=1} R_{njk}X_n\right)^2 = 0 \\[2em] \sum_{k=1}\left(\sum_{i=1}\sum_{n=1} S_{nik}X_n - \sum_{j=1}\sum_{n=1} R_{njk}X_n\right)^2 = 0 \end{array}\right\} \cdots(2)$$

$D_k$ is the quantity of an ordered product $P_k$. $S_{nik}$ is the quantity of the product $P_k$ shipped from the shipment place i in the operational transport n. $R_{njk}$ is the quantity of the product $P_k$ received at the collection place j in the operational transport n. The upper expression in (2) represents that the quantity of each ordered product and the total reception amount of the product at the collection place are coincident with each other, for example, satisfy the order. The lower expression in (2) represents that the total shipping amount of each product from the shipment place and the total reception amount of the product at the collection place are coincident with each other, for example, no product remains in the truck.

An expression representing the constraint (7) on use of the shipment places and the collection places is expression (3) below.

[Expression 3]

$$\sum_{i=1}\sum_{n=1}(S_iX_n - W_iX_n)^2 = 0 \quad and \quad \sum_{j=1}\sum_{n=1}(S_jX_n - W_jX_n)^2 = 0 \qquad \cdots(3)$$

$S_i$ is a constant. $S_i$ is 1 in the case where there is stopping at the shipment place i (the circular mark is present for the candidate operational transport) and 0 in the case where there is no stopping at the shipment place i. $S_j$ is a constant. $S_j$ is 1 in the case where there is stopping at the collection place j (the circular mark is present for the candidate operational transport) and 0 in the case where there is no stopping at the collection place j. $W_i$ is a constant. $W_i$ is 1 in the case where loading is performed at the shipment place i (the quantity of the product is described for the candidate operational transport) and 0 in the case where the loading is not performed. $W_j$ is a constant. $W_j$ is 1 in the case where unloading is performed at the collection place j (the quantity of the product is described for the candidate operational transport) and 0 in the case where the unloading is not performed. According to the constraint indicated by expression (3), it is demanded that the product be loaded at the shipment place where the truck stops and unloaded at the collection place where the truck stops.

Expression (4) in which the constraints and cost of expressions (1) to (3) described above are expressed by a single expression (object function = cost term + constraint terms) is as follows.

[Expression 4]

$$E = \sum_{n=1} COSTnXn$$

$$+A\sum_{k=1}\left(Dk - \sum_{j=1}\sum_{n=1} Rnjk\,Xn\right)^2 = 0$$

$$+B\sum_{k=1}\left(\sum_{i=1}\sum_{n=1} Snik\,Xn - \sum_{j=1}\sum_{n=1} Rnjk\,Xn\right)^2$$

$$+C\sum_{i=1}\sum_{n=1}(SiXn - WiXn)^2 \quad + D\sum_{j=1}\sum_{n=1}(SjXn - WjXn)^2$$

$$+E\left(1 - \sum_{n=1} FinXn - Yi\right)^2 + F\left(1 - \sum_{n=1} CjnXn - Yj\right)^2 \qquad \cdots(4)$$

COSTn is the operational expense used for the operational transport n. A, B, C, D, E, and F are weight coefficients in the constraint terms. $Y_i$ and $Y_j$ are slack variables and $Y_i \geq 0$, $Y_j \geq 0$.

In the case where a subset of the constraints is used, it is sufficient that the weight coefficients of the constraints used in expression (4) be increased (for example, 10,000,000) and the other weight coefficients be reduced (for example, 1) (a constraint becomes significant when the weight coefficient thereof increases). In the case where solving is performed on a mathematical programming problem with a normal calculator instead of using the Ising machine, expression (4) described above is not necessarily used (solving by using expressions (1) to (3) may be performed).

When solving is started, the candidate generation unit 11 generates a list of the candidate operational transports B1 based on the index values 1 to 3. For example, for each truck, the candidate generation unit 11 selects the operational transport IDs from the maximum value to the 20th place of the index 1. Next, the candidate generation unit 11 selects, from among the selected operational transport IDs, the operational transport IDs from the maximum value to the 15th place of the index 2. Next, the candidate generation unit 11 selects, from among the selected operational transport IDs, the operational transport IDs from the maximum value to the tenth place of the index 3. Next, the candidate generation unit 11 merges the results for the trucks to generate the list of the candidate operational transports B1.

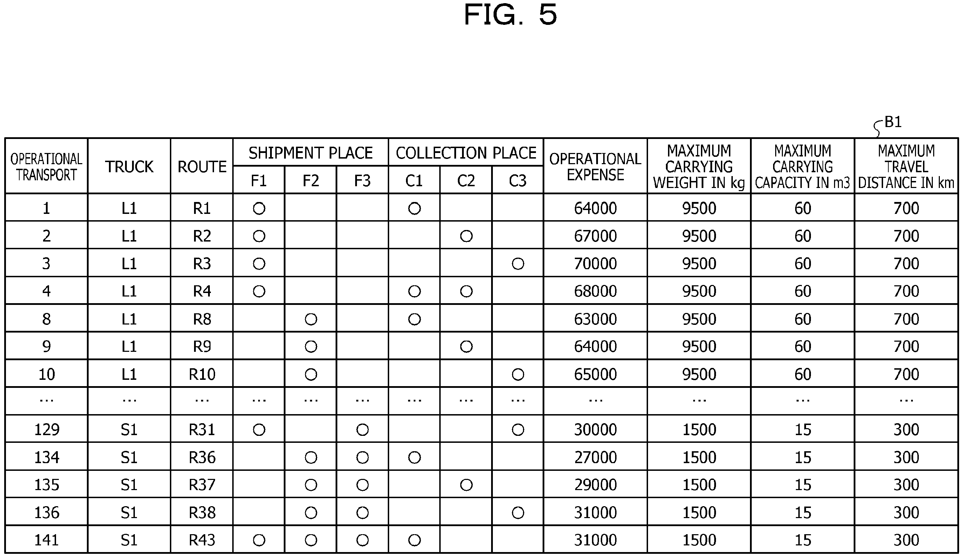

FIG. 5 is an explanatory diagram illustrating examples of the candidate operational transports B1. As illustrated in FIG. 5, the candidate generation unit 11 creates the list of the candidate operational transports B1 in which the results for the single 10-ton truck (L1), the single 4-ton truck (M1), and the 2-ton truck (S1) are merged. Although the candidate operational transports B1 at intermediate portions of the list are omitted from the illustrated example, it is assumed that the total number of the candidate operational transports B1 is 79.

Next, the optimization unit 13 uses all the 79 transports of the candidate operational transports B1 and performs optimization under a subset of the constraint conditions by expression (1). For example, the solving is performed under a subset of all the constraint conditions the content of which is "the product P shipped from the shipment place F1 is delivered to the collection place C2, for example, the truck shipped from the shipment place F1 stops at least the collection place C2".

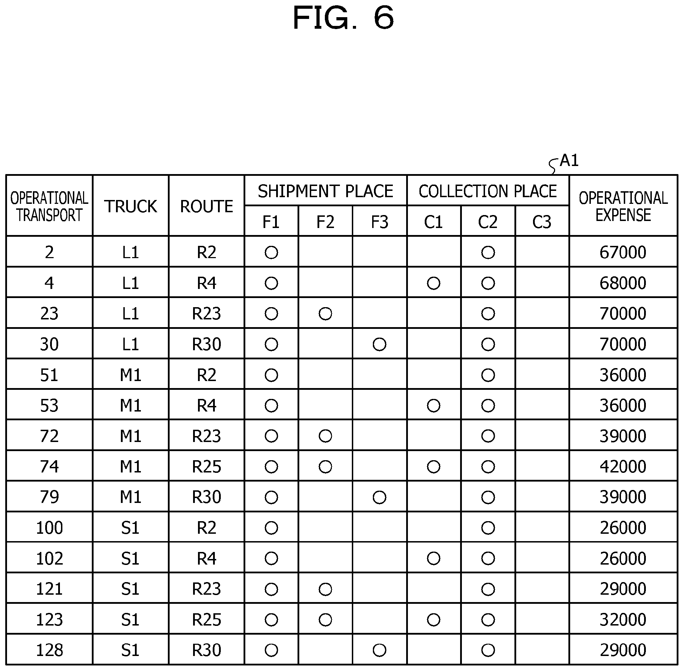

FIG. 6 is an explanatory diagram illustrating an example of the solution A1 of the solving result. It is assumed that the solution A1 as illustrated in FIG. 6 is obtained from the candidate operational transports B1 that includes 79 transports in all. Regarding the solution A1, the analysis unit 14 analyzes whether or not there is a constraint violation of each constraint condition. In the illustrated example, no delivery is made to the collection place C3. Thus, a violation of the constraint condition, "each of the collection places is used to receive at least one of the products" is obtained.

Based on the analysis result of the analysis unit 14, the additional candidate generation unit 15 generates the additional candidate transports B2 with the operational transports by which any one of the products is delivered to the collection place C3 out of the operational transport information D1.

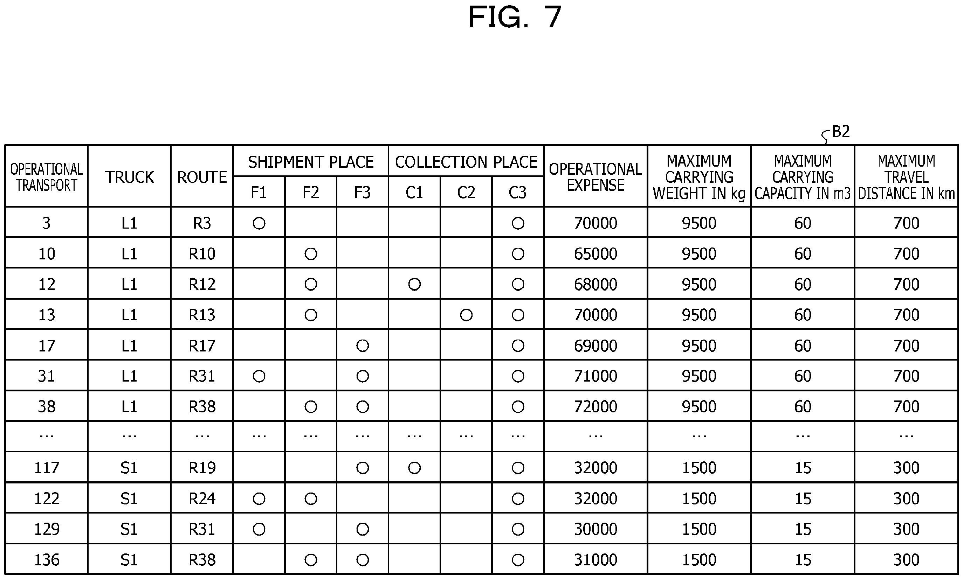

FIG. 7 is an explanatory diagram illustrating examples of the additional candidate transports B2. As illustrated in FIG. 7, for the additional candidate transports B2, operational transports to which the circular marks are present for the collection place C3 are selected.

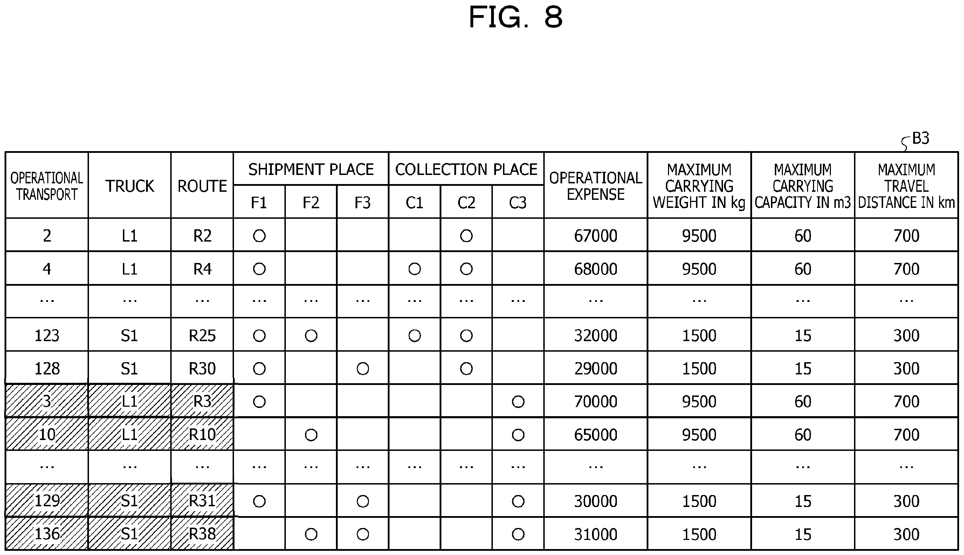

Next, the additional candidate generation unit 15 merges the solution A1 with the additional candidate transports B2 to generate updated candidate operational transports B3. FIG. 8 is an explanatory diagram illustrating examples of the updated candidate operational transports B3. Hatched portions in FIG. 8 indicate the additional candidate transports B2.

As illustrated in FIG. 8, the updated candidate operational transports B3 are obtained by merging the solution A1 with the additional candidate transports B2. Although the updated candidate operational transports B3 at intermediate portions of the list are omitted from the illustrated example, it is assumed that the total number of the updated candidate operational transports B3 is 43.

Next, the optimization unit 13 uses all the 49 transports of the updated candidate operational transports B3 and performs optimization under all the constraint conditions by expressions (1) to (3).

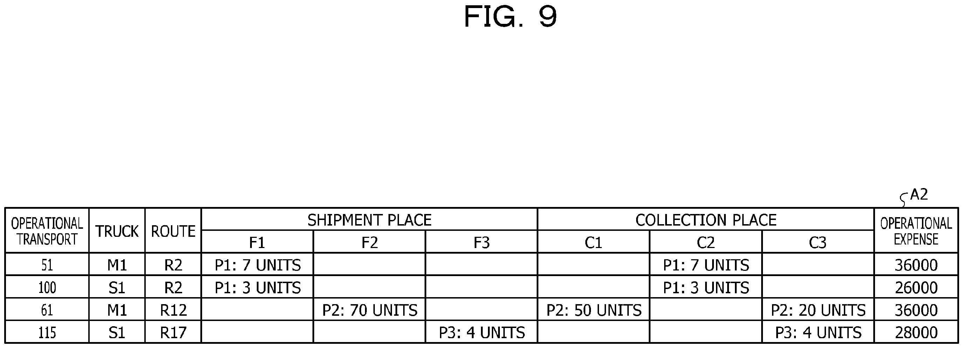

FIG. 9 is an explanatory diagram illustrating an example of the solution of the solving result. It is assumed that the solution A2 as illustrated in FIG. 9 is obtained from the updated candidate operational transports B3 that include 43 transports in all. In the evaluation unit 16 and the determination unit 17, since, as a result of evaluation of the solution A2, an evaluation reference value is satisfied, the solution A2 is determined as the solving result. The output unit 18 outputs the solution A2 as the combinatorial optimization result, and the processing ends.

In the first specific example, the combinatorial optimization is performed on at least 79 operational transports under a subset of the constraint conditions. Next, in the first specific example, the combinatorial optimization is performed on at least 43 operational transports under all the constraint conditions. Accordingly, in the first specific example, compared to the case where the combinatorial optimization is performed once on all the operational transports (at least 147 operational transports), the combinatorial optimization may be performed without significantly increasing the number of targets (the number of the operational transports) of the combinatorial optimization.

It is assumed that, in the second specific example, the order information is different from that of the first specific example as follows with the other conditions remaining the same. Shipment: • product P1 (500 kg, 3.0 m^3 per unit) shipped from shipment place F1: 10 units, • product P2 (50 kg, 0.3 m^3 per unit) shipped from shipment place F2: 70 units, • product P3 (250 kg, 1.5 m^3 per unit) shipped from shipment place F3: 4 units, Reception: • product P2 and product P3 received at collection place C1: 50 units and 4 units, respectively, • product P1 received at collection place C2: 10 units, • product P2 received at collection place C3: 20 units.

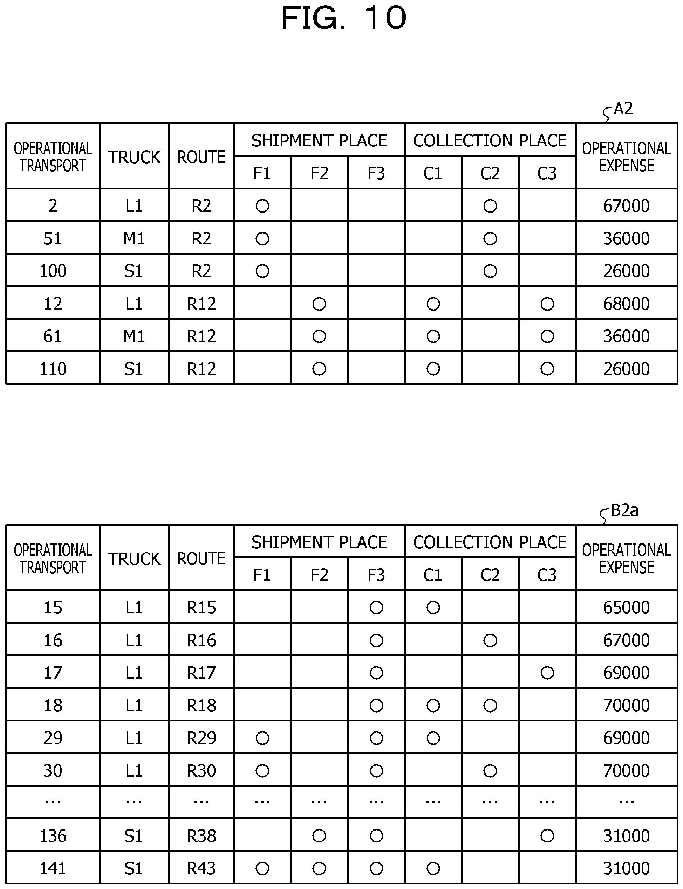

FIG. 10 is an explanatory diagram illustrating examples of the solution of the solving result and the additional candidate transports. As illustrated in FIG. 10, it is assumed that, in the second specific example, the solution A2 is obtained and the result of the evaluation for the solution A2 does not satisfy the evaluation reference value. In this case, the determination unit 17 returns the processing to the analysis unit 14 with the solution A2 as the immediately preceding solution.

Regarding the solution A2, the analysis unit 14 analyzes whether or not there is a constraint violation of each constraint condition. In the illustrated example, there is no shipment from the shipment place F3. Thus, a violation of the constraint condition, "each of the shipment places is used to ship at least one of the products" is obtained.

Based on the analysis result of the analysis unit 14, the additional candidate generation unit 15 generates an additional candidate transports B2a with the operational transports by which any one of the products is shipped from the shipment place F3 out of the operational transport information D1.

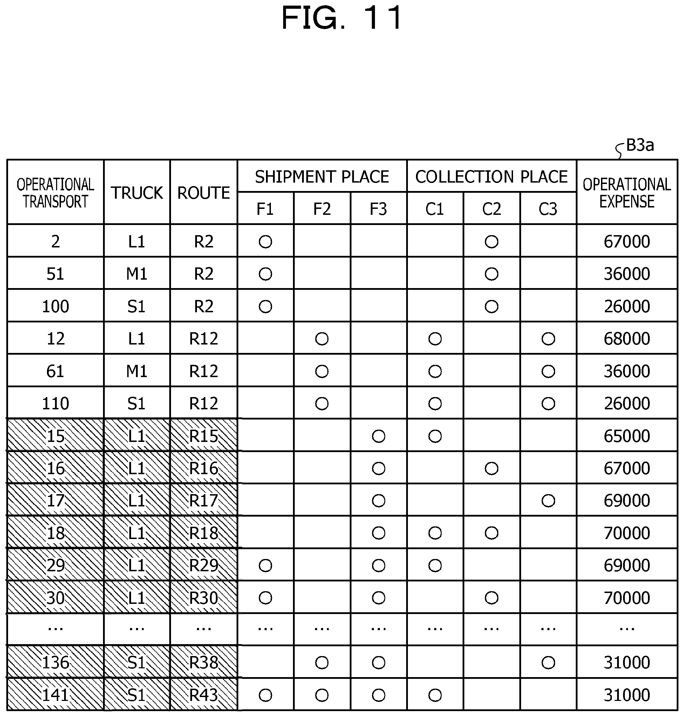

FIG. 11 is an explanatory diagram illustrating examples of updated candidate operational transports. As illustrated in FIG. 11, the additional candidate generation unit 15 merges the solution A2 with the additional candidate transports B2a (hatched portions) to generate updated candidate operational transports B3a. Although the updated candidate operational transports B3a at intermediate portions of the list are omitted from the illustrated example, it is assumed that the total number of the updated candidate operational transports B3a is 41.

Next, the optimization unit 13 uses all the 41 transports of the updated candidate operational transports B3a and performs optimization under all the constraint conditions by expressions (1) to (3).

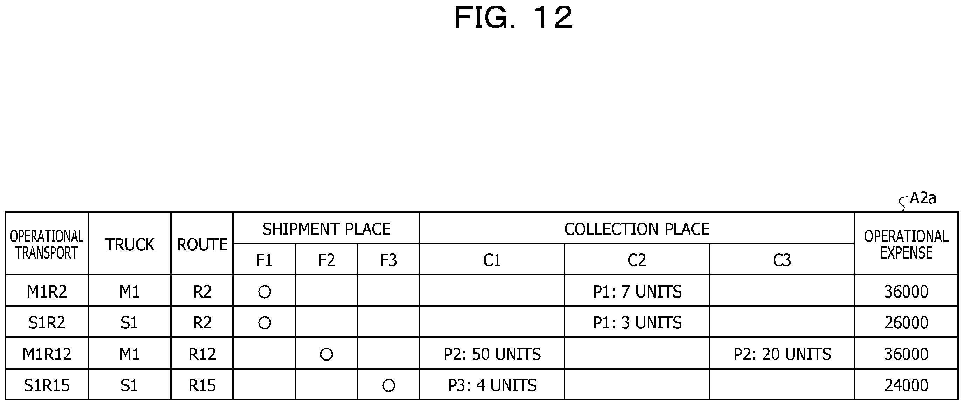

FIG. 12 is an explanatory diagram illustrating an example of the solution of the solving result. It is assumed that a solution A2a as illustrated in FIG. 12 is obtained from the updated candidate operational transports B3a that include 41 transports in all. In the evaluation unit 16 and the determination unit 17, since, as a result of evaluation of the solution A2a, the evaluation reference value is satisfied, the solution A2a is determined as the solving result. The output unit 18 outputs the solution A2a as the combinatorial optimization result, and the processing ends.

In the second specific example, the combinatorial optimization is performed on at least 79 operational transports under a subset of the constraint conditions. Next, in the second specific example, the combinatorial optimization is performed on at least 43 operational transports under all the constraint conditions. Next, in the second specific example, the combinatorial optimization is performed on at least 41 operational transports under all the constraint conditions. Accordingly, in the second specific example, compared to the case where the combinatorial optimization is performed once on all the operational transports (at least 147 operational transports), the combinatorial optimization may be performed without significantly increasing the number of targets (the number of the operational transports) of the combinatorial optimization.

As described above, the candidate generation unit 11 of the information processing device 1 generates the first candidate targets (candidate operational transports B1) based on the index values related to the cost out of the combinatorial targets (for example, operational transports) in the combinatorial optimization problem that minimizes the cost under the specific constraint conditions. The analysis unit 14 of the information processing device 1 analyzes the constraint violation included in the solution A1 based on the result (solution A1) of solving and optimization under the first constraint conditions which are a subset of the specific constraint conditions based on the candidate operational transports B1. The additional candidate generation unit 15 of the information processing device 1 generates the second candidate targets (updated candidate operational transports B3) by adding to the solution A1 the targets (additional candidate transports B2) related to resolving of the analyzed constraint violation out of the combinatorial targets. The evaluation unit 16 of the information processing device 1 obtains the result (solution A2) of solving and optimization under the second constraint conditions the number of which is greater than that of the first constraint conditions included in the specific constraint conditions based on the updated candidate operational transports B3. The determination unit 17 of the information processing device 1 determines the solving result of the combinatorial optimization problem based on the evaluation result of the obtained solution A2.

As described above, with the information processing device 1, the combinatorial targets in the optimization problem are, to obtain the solution, narrowed down to small-scale combinatorial targets such as the first candidate targets based on the index values related to the cost and the second candidate targets based on the targets related to resolving of the constraint violation. Thus, the solution may be obtained in a shorter period of calculation time. Accordingly, with the information processing device 1, even when the scale of the optimization problem is large (for example, about a million operational transports that become the combinatorial targets), the solution may be obtained within a practical period of time.

When the evaluation result satisfies a specific condition (for example, evaluation value ≤ determination reference value), the determination unit 17 determines the solution A2 as the solving result. Thus, the information processing device 1 may use, as the solving result, the solution A2 the evaluation result of which satisfies the specific condition.

When the evaluation result does not satisfy the specific condition (for example, evaluation value > determination reference value), the determination unit 17 sets the solution A2 as the solution A1, and the processes of the analysis unit 14, the additional candidate generation unit 15, and the evaluation unit 16 are repeated. Next, the determination unit 17 determines the solving result based on the solution A2 having been obtained by the repetition. As described above, when the evaluation result of the solution A2 does not satisfy the specific condition, the information processing device 1 may obtain the solving result by repeating the processes of the analysis unit 14, the additional candidate generation unit 15, and the evaluation unit 16.

The candidate generation unit 11 sets, as the first candidate targets (candidate operational transports B1), the targets (for example, operational transports) up to the specific place in decreasing order (descending order) of the magnitude of the respective index values of the combinatorial targets (operational transports) when the operational transports are sorted. Accordingly, in the information processing device 1, the targets that are highly likely to reduce the cost may be set as the first candidate targets to narrow down the combinatorial targets in the optimization problem.

The additional candidate generation unit 15 obtains, from the solution A1, the targets (operational transports) related to resolving of the constraint violation included in the solution A1 based on the machine-learned model based on the set of the first past result data including the specific constraint violation and the second past result data related to resolving of the specific constraint violation. Accordingly, the information processing device 1 may obtain the targets related to resolving the constraint violation included in the solution A1 by using the machine-learned model.

The combinatorial optimization problem solved by the information processing device 1 is the delivery planning problem for obtaining an operational schedule in which operational transports for delivering an article to a remote location (from the shipment place to the collection place) are combined so as to minimize the operational cost under the constraint conditions related to the delivery of the article. Accordingly, the information processing device 1 may obtain, in the delivery planning problem, the solution in a shorter period of calculation time. For example, the solution of the delivery planning problem may be obtained within a practical period of time.

It is noted that each of the components of each of the devices illustrated in the drawings is not necessarily physically configured as illustrated in the drawings. For example, specific forms of the separation and integration of the device are not limited to those illustrated in the drawings. The entirety or part of the device may be configured by functionally or physically separating into arbitrary units or integrating into an arbitrary unit in accordance with various loads, usage situations, and the like.

For example, the optimization process that actually solves the combinatorial optimization problem in the optimization unit 13 of the information processing device 1 may be externally distributed. As an example, the optimization unit 13 may request an external device that provides a function such as a digital annealer or an optimization solver to perform the optimization process and obtain a result of the optimization process performed by the external device.

All or any subset of various processing functions of the input unit 10, the candidate generation unit 11, the solving information storage unit 12, the optimization unit 13, the analysis unit 14, the additional candidate generation unit 15, the evaluation unit 16, the determination unit 17, and the output unit 18 of the information processing device 1 may be executed in the central processing unit (CPU) (or a microcomputer such as a microprocessor unit (MPU) or a microcontroller unit (MCU)). Of course, all or any subset of the various processing functions may be executed in programs analyzed and executed by the CPU (or a microcomputer such as the MPU or MCU) or in hardware using wired logic. The various processing functions performed in the information processing device 1 may be executed in such a way that a plurality of computers cooperate with each other via cloud computing.

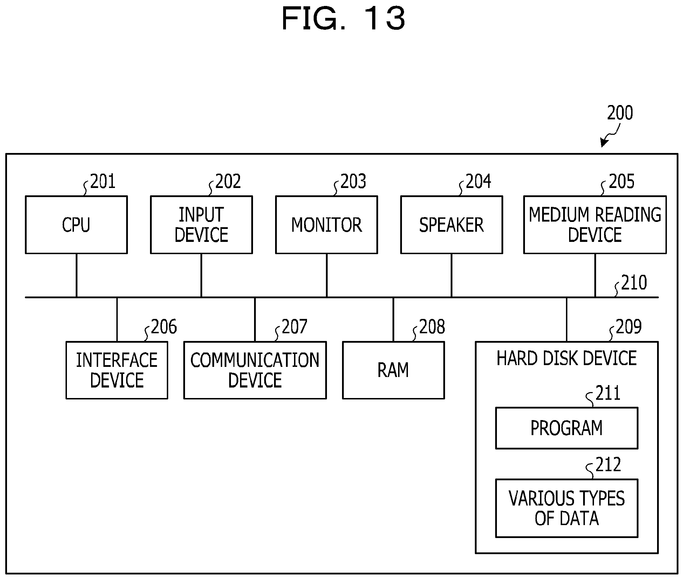

The various processes described according to the above-described embodiment may be realized when the computer executes a program prepared in advance. Hereinafter, an example of the configuration of the computer (hardware) that executes the program having similar functions to those of the above-described embodiment will be described. FIG. 13 is an explanatory diagram illustrating an example of the configuration of the computer.

As illustrated in FIG. 13, a computer 200 includes a CPU 201 that executes various types of arithmetic processing, an input device 202 that accepts data input, a monitor 203, and a speaker 204. The computer 200 also includes a medium reading device 205 that reads a program or the like from a storage medium, an interface device 206 that enables coupling to various devices, and a communication device 207 that couples the computer 200 via communication to an external device in a wired or wireless manner. The information processing device 1 also includes a random-access memory (RAM) 208 that temporarily stores various types of information and a hard disk device 209. Each of the devices and the like (201 to 209) in the computer 200 is coupled to a bus 210.

The hard disk device 209 stores a program 211 for executing the various processes in the functional configurations (for example, the input unit 10, the candidate generation unit 11, the solving information storage unit 12, the optimization unit 13, the analysis unit 14, the additional candidate generation unit 15, the evaluation unit 16, the determination unit 17, and the output unit 18) described according to the above-described embodiment. The hard disk device 209 also stores various types of data 212 to be referred to by the program 211. The input device 202 accepts, for example, input of operation information from an operator. The monitor 203 displays, for example, various screens operated by the operator. For example, a printer or the like is coupled to the interface device 206. The communication device 207 is coupled to a communication network such as a local area network (LAN) and exchanges various types of information with the external device via the communication network.

The CPU 201 reads the program 211 stored in the hard disk device 209 and loads and executes the read program 211 in the RAM 208 to perform the various processes related to the above-described functional configurations (for example, the input unit 10, the candidate generation unit 11, the solving information storage unit 12, the optimization unit 13, the analysis unit 14, the additional candidate generation unit 15, the evaluation unit 16, the determination unit 17, and the output unit 18). For example, the CPU 201 is an example of a control unit. The program 211 is not necessarily stored in the hard disk device 209. For example, the program 211 stored in the storage medium readable by the computer 200 may be read and executed. For example, a portable recording medium such as a compact disc read-only memory (CD-ROM), a Digital Versatile Disc (DVD), or a Universal Serial Bus (USB) memory, a semiconductor memory such as a flash memory, a hard disk drive, or the like corresponds to the storage medium readable by the computer 200. The program 211 may be stored in a device coupled to a public network, the Internet, a LAN, or the like, and the computer 200 may read and execute the program 211 from the device.

**Claims**

1. A solving program in which a computer performs processing of:

   generating, based on an index value related to an evaluation function value, a first candidate target from combinatorial targets in a combinatorial optimization problem that minimizes the evaluation function value under a plurality of constraint conditions;
   analyzing, based on a first result obtained by solving and optimizing based on the first candidate target under a first constraint condition that is a subset of the plurality of constraint conditions, a combination that is included in the first result and that is a constraint violation;
   selecting, from among the combinatorial targets, a target related to resolving of the constraint violation that has been analyzed;
   obtaining, based on a second candidate target that include the selected combinatorial target and the first result, a second result optimized based on the first constraint condition and a second constraint condition that are included in the plurality of constraint conditions; and
   determining a solving result of the combinatorial optimization problem based on an evaluation result of the obtained second result.

2. The solving program according to claim 1, wherein
   the determining includes determining the second result as the solving result when the evaluation result satisfies a first condition.

3. The solving program according to claim 2, wherein, when the evaluation result does not satisfy the first condition, the determining includes determining the solving result based on the second result which is obtained by repeating the analyzing, generating of the second candidate target, and the obtaining.

4. The solving program according to any one of claims 1 to 3, wherein
the generating includes generating one or more first candidate target including the first candidate target, the one or more first candidate target corresponding to combinatorial targets up to a specific place when the combinatorial targets are sorted in descending order of the index value for each of the combinatorial targets.

5. The solving program according to any one of claims 1 to 4, wherein the processing further includes
specifying, based on a machine-learned model based on a set of first result data including the combination which is the constraint violation and second result data related to resolving of the constraint violation, the second candidate targets from the combinatorial targets, as the targets related to resolving of the constraint violation included in the first result based on the first result.

6. The solving program according to any one of claims 1 to 5, wherein the combinatorial optimization problem is a delivery planning problem to obtain an operational schedule in which operational transports by which an article is delivered to a remote location are combined in a manner in which an operational cost is minimized under a constraint condition related to delivery of the article.

7. A solving method comprising:

generating, based on an index value related to an evaluation function value, a first candidate target from combinatorial targets in a combinatorial optimization problem that minimizes the evaluation function value under a plurality of constraint conditions;
analyzing, based on a first result obtained by solving and optimizing based on the first candidate target under a first constraint condition that is a subset of the plurality of constraint conditions, a combination that is included in the first result and that is a constraint violation;
selecting, from among the combinatorial targets, a target related to resolving of the constraint violation that has been analyzed;
obtaining, based on a second candidate target that include the selected combinatorial target and the first result, a second result optimized based on the first constraint condition and a second constraint condition that are included in the plurality of constraint conditions; and
determining a solving result of the combinatorial optimization problem based on an evaluation result of the obtained second result.

8. An information processing device comprising:
a controller configured to:

generate, based on an index value related to an evaluation function value, a first candidate target from combinatorial targets in a combinatorial optimization problem that minimizes the evaluation function value under a plurality of constraint conditions,
analyze, based on a first result obtained by solving and optimizing based on the first candidate target under a first constraint condition that is a subset of the plurality of constraint conditions, a combination that is included in the first result and that is a constraint violation,
select, from among the combinatorial targets, a target related to resolving of the constraint violation that has been analyzed,
obtain, based on a second candidate target that include the selected combinatorial target and the first result, a second result optimized based on the first constraint condition and a second constraint condition that are included in the plurality of constraint conditions, and
determine a solving result of the combinatorial optimization problem based on an evaluation result of the obtained second result.

# FIG. 1

# FIG. 2

# FIG. 3

```
                    ┌──────────┐
                    │  START   │
                    └──────────┘
                         │
                         ▼                              ╭S1
┌────────────────────────────────────────────────────────┐
│       INPUT (DETERMINATION REFERENCE VALUE, DATA)        │
└────────────────────────────────────────────────────────┘
                         │
                         ▼                              ╭S2
┌────────────────────────────────────────────────────────┐
│                   GENERATE INDICES                       │
└────────────────────────────────────────────────────────┘
                         │
                         ▼                              ╭S3
┌────────────────────────────────────────────────────────┐
│        GENERATE CANDIDATE OPERATIONAL TRANSPORTS         │
└────────────────────────────────────────────────────────┘
                         │
                         ▼                              ╭S4
┌────────────────────────────────────────────────────────┐
│      SOLVE PROBLEM BY USING CANDIDATE OPERATIONAL        │
│   TRANSPORTS (UNDER FIRST CONSTRAINT CONDITION)          │
└────────────────────────────────────────────────────────┘
                         │
                         ▼                              ╭S5
┌────────────────────────────────────────────────────────┐
│      ANALYZE CONTENT OF CONSTRAINT VIOLATION FOR         │
│         IMMEDIATELY PRECEDING SOLUTION                   │
└────────────────────────────────────────────────────────┘
                         │
                         ▼                              ╭S6
┌────────────────────────────────────────────────────────┐
│         GENERATE ADDITIONAL CANDIDATE TRANSPORT          │
└────────────────────────────────────────────────────────┘
                         │
                         ▼                              ╭S7
┌────────────────────────────────────────────────────────┐
│  ADD ADDITIONAL CANDIDATE TRANSPORT TO IMMEDIATELY PRECEDING │
│   SOLUTION (UPDATED CANDIDATE OPERATIONAL TRANSPORTS)    │
└────────────────────────────────────────────────────────┘
                         │
                         ▼                              ╭S8
┌────────────────────────────────────────────────────────┐
│  SOLVE PROBLEM BY USING UPDATED CANDIDATE OPERATIONAL    │
│   TRANSPORTS (UNDER SECOND CONSTRAINT CONDITIONS)        │
└────────────────────────────────────────────────────────┘
                         │
                         ▼                              ╭S9
┌────────────────────────────────────────────────────────┐
│  CALCULATE EVALUATION VALUE BY USING IMMEDIATELY         │
│          PRECEDING SOLUTION                              │
└────────────────────────────────────────────────────────┘
                         │
                         ▼                              ╭S10
            ◇ EVALUATION VALUE
     NO    ENTIRELY SATISFIES DETERMINATION
            REFERENCE VALUE? ◇
                         │ YES                          ╭S11
┌────────────────────────────────────────────────────────┐
│        OUTPUT (COMBINATORIAL OPTIMIZATION RESULT)        │
└────────────────────────────────────────────────────────┘
                         │
                         ▼
                    ┌──────────┐
                    │   END    │
                    └──────────┘
```

# FIG. 4A

D1

| OPERATIONAL TRANSPORT | TRUCK | ROUTE | SHIPMENT PLACE | | | COLLECTION PLACE | | | OPERATIONAL EXPENSE | MAXIMUM CARRYING WEIGHT IN kg | MAXIMUM CARRYING CAPACITY IN m3 | MAXIMUM TRAVEL DISTANCE IN km | INDEX 1 kg/TEN THOUSAND YEN | INDEX 2 m3/TEN THOUSAND YEN | INDEX 3 km/TEN THOUSAND YEN |
|---|---|---|---|---|---|---|---|---|---|---|---|---|---|---|---|
| | | | F1 | F2 | F3 | C1 | C2 | C3 | | | | | | | |
| 50 | M1 | R1 | O | | | O | | | 33000 | 3500 | 30 | 400 | 1061 | 9.091 | 121.2 |
| 51 | M1 | R2 | O | | | | O | | 36000 | 3500 | 30 | 400 | 972 | 8.333 | 111.1 |
| 52 | M1 | R3 | O | | | | | O | 39000 | 3500 | 30 | 400 | 897 | 7.692 | 102.6 |
| 53 | M1 | R4 | O | | | O | O | | 36000 | 3500 | 30 | 400 | 972 | 8.333 | 111.1 |
| 54 | M1 | R5 | O | | | O | | O | 42000 | 3500 | 30 | 400 | 833 | 7.143 | 95.2 |
| 55 | M1 | R6 | O | | | | O | O | 48000 | 3500 | 30 | 400 | 729 | 6.250 | 83.3 |
| 56 | M1 | R7 | O | | | O | O | O | 51000 | 3500 | 30 | 400 | 686 | 5.882 | 78.4 |
| 57 | M1 | R8 | | O | | O | | | 32000 | 3500 | 30 | 400 | 1094 | 9.375 | 125.0 |
| 58 | M1 | R9 | | O | | | O | | 33000 | 3500 | 30 | 400 | 1061 | 9.091 | 121.2 |
| 59 | M1 | R10 | | O | | | | O | 34000 | 3500 | 30 | 400 | 1029 | 8.824 | 117.6 |
| 60 | M1 | R11 | | O | | O | O | | 34000 | 3500 | 30 | 400 | 1029 | 8.824 | 117.6 |
| ... | ... | ... | ... | ... | ... | ... | ... | ... | ... | ... | ... | ... | ... | ... | ... |

EP 3 985 581 A1

# FIG. 4B

D1

**SHIPMENT PLACE**

| OPERATIONAL TRANSPORT | TRUCK | ROUTE | F1 | | | | F2 | | | | PR |
|---|---|---|---|---|---|---|---|---|---|---|---|
| | | | PRODUCT | NUMBER OF UNITS | TOTAL WEIGHT | TOTAL CAPACITY | PRODUCT | NUMBER OF UNITS | TOTAL WEIGHT | TOTAL CAPACITY | |
| 50 | M1 | R2 | P1 | 5 | 2500 | 15 | P1 | | | | |
| | | | P2 | 10 | 500 | 3 | P2 | | | | |
| | | | P3 | 1 | 250 | 1.5 | P3 | | | | |
| 51 | M1 | R2 | P1 | 7 | 3500 | 21 | P1 | | | | |
| | | | P2 | | | | P2 | | | | |
| | | | P3 | | | | P3 | | | | |
| ... | ... | ... | ... | ... | ... | ... | ... | ... | ... | ... | |

**COLLECTION PLACE**

| OPERATIONAL TRANSPORT | TRUCK | ROUTE | C1 | | | | C2 | | | |
|---|---|---|---|---|---|---|---|---|---|---|
| | | | PRODUCT | NUMBER OF UNITS | TOTAL WEIGHT | TOTAL CAPACITY | PRODUCT | NUMBER OF UNITS | TOTAL WEIGHT | TOTAL CAPACITY |
| 50 | M1 | R2 | P1 | 5 | 2500 | 15 | P1 | | | |
| | | | P2 | 10 | 500 | 3 | P2 | | | |
| | | | P3 | 1 | 250 | 1.5 | P3 | | | |
| 51 | M1 | R2 | P1 | | | | P1 | 7 | | |
| | | | P2 | | | | P2 | | | |
| | | | P3 | | | | P3 | | | |
| ... | ... | ... | ... | ... | ... | ... | ... | ... | ... | ... |

# FIG. 4C

| | SHIPMENT PLACE | | | |
|---|---|---|---|---|
| | F3 | | | |
| L ITY | PRODUCT | NUMBER OF UNITS | TOTAL WEIGHT | TOTAL CAPACITY |
| | P1 | | | |
| | P2 | | | |
| | P3 | | | |
| | P1 | | | |
| | P2 | | | |
| | P3 | | | |
| | ... | ... | ... | ... |
| | COLLECTION PLACE | | | |
| | F3 | | | |
| | PRODUCT | NUMBER OF UNITS | TOTAL WEIGHT | TOTAL CAPACITY |
| | P1 | | | |
| | P2 | | | |
| | P3 | | | |
| | P1 | | | |
| | P2 | | | |
| | P3 | | | |
| | ... | ... | ... | ... |

EP 3 985 581 A1

# FIG. 5

EP 3 985 581 A1

| OPERATIONAL TRANSPORT | TRUCK | ROUTE | SHIPMENT PLACE | | | COLLECTION PLACE | | | OPERATIONAL EXPENSE | MAXIMUM CARRYING WEIGHT IN kg | MAXIMUM CARRYING CAPACITY IN m3 | MAXIMUM TRAVEL DISTANCE IN km |
|---|---|---|---|---|---|---|---|---|---|---|---|---|
| | | | F1 | F2 | F3 | C1 | C2 | C3 | | | | |
| 1 | L1 | R1 | O | | | O | | | 64000 | 9500 | 60 | 700 |
| 2 | L1 | R2 | O | | | | O | | 67000 | 9500 | 60 | 700 |
| 3 | L1 | R3 | O | | | | | O | 70000 | 9500 | 60 | 700 |
| 4 | L1 | R4 | O | | | O | O | | 68000 | 9500 | 60 | 700 |
| 8 | L1 | R8 | | O | | O | | | 63000 | 9500 | 60 | 700 |
| 9 | L1 | R9 | | O | | | O | | 64000 | 9500 | 60 | 700 |
| 10 | L1 | R10 | | O | | | | O | 65000 | 9500 | 60 | 700 |
| ... | ... | ... | ... | ... | ... | ... | ... | ... | ... | ... | ... | ... |
| 129 | S1 | R31 | O | | O | | | O | 30000 | 1500 | 15 | 300 |
| 134 | S1 | R36 | | O | O | O | | | 27000 | 1500 | 15 | 300 |
| 135 | S1 | R37 | | O | O | | O | | 29000 | 1500 | 15 | 300 |
| 136 | S1 | R38 | | O | O | | | O | 31000 | 1500 | 15 | 300 |
| 141 | S1 | R43 | O | O | O | O | | | 31000 | 1500 | 15 | 300 |

B1

# FIG. 6

A1

| OPERATIONAL TRANSPORT | TRUCK | ROUTE | SHIPMENT PLACE | | | COLLECTION PLACE | | | OPERATIONAL EXPENSE |
|---|---|---|---|---|---|---|---|---|---|
| | | | F1 | F2 | F3 | C1 | C2 | C3 | |
| 2 | L1 | R2 | O | | | | O | | 67000 |
| 4 | L1 | R4 | O | | | O | O | | 68000 |
| 23 | L1 | R23 | O | O | | | O | | 70000 |
| 30 | L1 | R30 | O | | O | | O | | 70000 |
| 51 | M1 | R2 | O | | | | O | | 36000 |
| 53 | M1 | R4 | O | | | O | O | | 36000 |
| 72 | M1 | R23 | O | O | | | O | | 39000 |
| 74 | M1 | R25 | O | O | | O | O | | 42000 |
| 79 | M1 | R30 | O | | O | | O | | 39000 |
| 100 | S1 | R2 | O | | | | O | | 26000 |
| 102 | S1 | R4 | O | | | O | O | | 26000 |
| 121 | S1 | R23 | O | O | | | O | | 29000 |
| 123 | S1 | R25 | O | O | | O | O | | 32000 |
| 128 | S1 | R30 | O | | O | | O | | 29000 |

# FIG. 7

| OPERATIONAL TRANSPORT | TRUCK | ROUTE | SHIPMENT PLACE | | | COLLECTION PLACE | | | OPERATIONAL EXPENSE | MAXIMUM CARRYING WEIGHT IN kg | MAXIMUM CARRYING CAPACITY IN m3 | MAXIMUM TRAVEL DISTANCE IN km |
|---|---|---|---|---|---|---|---|---|---|---|---|---|
| | | | F1 | F2 | F3 | C1 | C2 | C3 | | | | |
| 3 | L1 | R3 | O | | | | | O | 70000 | 9500 | 60 | 700 |
| 10 | L1 | R10 | | O | | | | O | 65000 | 9500 | 60 | 700 |
| 12 | L1 | R12 | | O | | O | | O | 68000 | 9500 | 60 | 700 |
| 13 | L1 | R13 | | O | | | O | O | 70000 | 9500 | 60 | 700 |
| 17 | L1 | R17 | | | O | | | O | 69000 | 9500 | 60 | 700 |
| 31 | L1 | R31 | O | | O | | | O | 71000 | 9500 | 60 | 700 |
| 38 | L1 | R38 | | O | O | | | O | 72000 | 9500 | 60 | 700 |
| ... | ... | ... | ... | ... | ... | ... | ... | ... | ... | ... | ... | ... |
| 117 | S1 | R19 | | | O | O | | O | 32000 | 1500 | 15 | 300 |
| 122 | S1 | R24 | O | O | | | | O | 32000 | 1500 | 15 | 300 |
| 129 | S1 | R31 | O | | O | | | O | 30000 | 1500 | 15 | 300 |
| 136 | S1 | R38 | | O | O | | | O | 31000 | 1500 | 15 | 300 |

B2

FIG. 8

B3

| OPERATIONAL TRANSPORT | TRUCK | ROUTE | SHIPMENT PLACE | | | COLLECTION PLACE | | | OPERATIONAL EXPENSE | MAXIMUM CARRYING WEIGHT IN kg | MAXIMUM CARRYING CAPACITY IN m3 | MAXIMUM TRAVEL DISTANCE IN km |
|---|---|---|---|---|---|---|---|---|---|---|---|---|
| | | | F1 | F2 | F3 | C1 | C2 | C3 | | | | |
| 2 | L1 | R2 | ○ | | | | ○ | | 67000 | 9500 | 60 | 700 |
| 4 | L1 | R4 | ○ | | | ○ | ○ | | 68000 | 9500 | 60 | 700 |
| ... | ... | ... | ... | ... | ... | ... | ... | ... | ... | ... | ... | ... |
| 123 | S1 | R25 | ○ | ○ | | ○ | ○ | | 32000 | 1500 | 15 | 300 |
| 128 | S1 | R30 | ○ | | ○ | | ○ | | 29000 | 1500 | 15 | 300 |
| 3 | L1 | R3 | ○ | | | | | ○ | 70000 | 9500 | 60 | 700 |
| 10 | L1 | R10 | | ○ | | | | ○ | 65000 | 9500 | 60 | 700 |
| ... | ... | ... | ... | ... | ... | ... | ... | ... | ... | ... | ... | ... |
| 129 | S1 | R31 | ○ | | ○ | | | ○ | 30000 | 1500 | 15 | 300 |
| 136 | S1 | R38 | | ○ | ○ | | | ○ | 31000 | 1500 | 15 | 300 |

EP 3 985 581 A1

# FIG. 9

EP 3 985 581 A1

| OPERATIONAL TRANSPORT | TRUCK | ROUTE | SHIPMENT PLACE | | | COLLECTION PLACE | | | OPERATIONAL EXPENSE |
|---|---|---|---|---|---|---|---|---|---|
| | | | F1 | F2 | F3 | C1 | C2 | C3 | |
| 51 | M1 | R2 | P1: 7 UNITS | | | | P1: 7 UNITS | | 36000 |
| 100 | S1 | R2 | P1: 3 UNITS | | | | P1: 3 UNITS | | 26000 |
| 61 | M1 | R12 | | P2: 70 UNITS | | P2: 50 UNITS | | P2: 20 UNITS | 36000 |
| 115 | S1 | R17 | | | P3: 4 UNITS | | | P3: 4 UNITS | 28000 |

A2

# FIG. 10

A2

| OPERATIONAL TRANSPORT | TRUCK | ROUTE | SHIPMENT PLACE | | | COLLECTION PLACE | | | OPERATIONAL EXPENSE |
|---|---|---|---|---|---|---|---|---|---|
| | | | F1 | F2 | F3 | C1 | C2 | C3 | |
| 2 | L1 | R2 | O | | | | O | | 67000 |
| 51 | M1 | R2 | O | | | | O | | 36000 |
| 100 | S1 | R2 | O | | | | O | | 26000 |
| 12 | L1 | R12 | | O | | O | | O | 68000 |
| 61 | M1 | R12 | | O | | O | | O | 36000 |
| 110 | S1 | R12 | | O | | O | | O | 26000 |

B2a

| OPERATIONAL TRANSPORT | TRUCK | ROUTE | SHIPMENT PLACE | | | COLLECTION PLACE | | | OPERATIONAL EXPENSE |
|---|---|---|---|---|---|---|---|---|---|
| | | | F1 | F2 | F3 | C1 | C2 | C3 | |
| 15 | L1 | R15 | | | O | O | | | 65000 |
| 16 | L1 | R16 | | | O | | O | | 67000 |
| 17 | L1 | R17 | | | O | | | O | 69000 |
| 18 | L1 | R18 | | | O | O | O | | 70000 |
| 29 | L1 | R29 | O | | O | O | | | 69000 |
| 30 | L1 | R30 | O | | O | | O | | 70000 |
| ... | ... | ... | ... | ... | ... | ... | ... | ... | ... |
| 136 | S1 | R38 | | O | O | | | O | 31000 |
| 141 | S1 | R43 | O | O | O | O | | | 31000 |

# FIG. 11

B3a

| OPERATIONAL TRANSPORT | TRUCK | ROUTE | SHIPMENT PLACE | | | COLLECTION PLACE | | | OPERATIONAL EXPENSE |
|---|---|---|---|---|---|---|---|---|---|
| | | | F1 | F2 | F3 | C1 | C2 | C3 | |
| 2 | L1 | R2 | O | | | | O | | 67000 |
| 51 | M1 | R2 | O | | | | O | | 36000 |
| 100 | S1 | R2 | O | | | | O | | 26000 |
| 12 | L1 | R12 | | O | | O | | O | 68000 |
| 61 | M1 | R12 | | O | | O | | O | 36000 |
| 110 | S1 | R12 | | O | | O | | O | 26000 |
| 15 | L1 | R15 | | | O | O | | | 65000 |
| 16 | L1 | R16 | | | O | | O | | 67000 |
| 17 | L1 | R17 | | | O | | | O | 69000 |
| 18 | L1 | R18 | | | O | O | O | | 70000 |
| 29 | L1 | R29 | O | | O | O | | | 69000 |
| 30 | L1 | R30 | O | | O | | O | | 70000 |
| ... | ... | ... | ... | ... | ... | ... | ... | ... | ... |
| 136 | S1 | R38 | | O | O | | | O | 31000 |
| 141 | S1 | R43 | O | O | O | O | | | 31000 |

# FIG. 12

A2a

| OPERATIONAL TRANSPORT | TRUCK | ROUTE | SHIPMENT PLACE | | | COLLECTION PLACE | | | OPERATIONAL EXPENSE |
|---|---|---|---|---|---|---|---|---|---|
| | | | F1 | F2 | F3 | C1 | C2 | C3 | |
| M1R2 | M1 | R2 | ○ | | | | P1: 7 UNITS | | 36000 |
| S1R2 | S1 | R2 | ○ | | | | P1: 3 UNITS | | 26000 |
| M1R12 | M1 | R12 | | ○ | | P2: 50 UNITS | | P2: 20 UNITS | 36000 |
| S1R15 | S1 | R15 | | | ○ | P3: 4 UNITS | | | 24000 |

# FIG. 13

200

CPU 201

INPUT DEVICE 202

MONITOR 203

SPEAKER 204

MEDIUM READING DEVICE 205

210

INTERFACE DEVICE 206

COMMUNICATION DEVICE 207

RAM 208

HARD DISK DEVICE 209

PROGRAM 211

VARIOUS TYPES OF DATA 212

Europäisches
Patentamt

European
Patent Office

Office européen
des brevets

# EUROPEAN SEARCH REPORT

Application Number

EP 21 18 9087

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 530 143 A2 (SAP AG [DE]) 11 May 2005 (2005-05-11) * abstract; figures 2-4 * * paragraphs [0001] - [0005] * * paragraphs [0015] - [0025] * * paragraphs [0028], [0029], [0031] * ----- | 1-8 | INV. G06Q10/04 G06Q10/08 |
| X | US 2015/205759 A1 (ISRAEL ROBERT [CA] ET AL) 23 July 2015 (2015-07-23) * abstract; figures 2a, 4, 9 * * paragraphs [0001] - [0009] * ----- | 1-8 | |

TECHNICAL FIELDS SEARCHED (IPC)

G06Q

The present search report has been drawn up for all claims

| Place of search | Date of completion of the search | Examiner |
|---|---|---|
| Munich | 17 January 2022 | Bauer, Rodolphe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 18 9087

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2022

| Patent document cited in search report | | Publication date | Patent family member(s) | | Publication date |
|---|---|---|---|---|---|
| EP 1530143 | A2 | 11-05-2005 | EP | 1530143 A2 | 11-05-2005 |
| | | | US | 2005075952 A1 | 07-04-2005 |
| US 2015205759 | A1 | 23-07-2015 | NONE | | |

EPO FORM P0459

For more details about this annex : see Official Journal of the European Patent Office, No. 12/82

**REFERENCES CITED IN THE DESCRIPTION**

**Patent documents cited in the description**

- JP 11245819 A
- JP 2002302257 A
- JP 2007210699 A